(19) **Europäisches Patentamt / European Patent Office / Office européen des brevets**

(11) **EP 3 761 436 B1**

(12) **EUROPEAN PATENT SPECIFICATION**

(45) Date of publication and mention
of the grant of the patent:
**20.04.2022 Bulletin 2022/16**

(21) Application number: **18907863.7**

(22) Date of filing: **31.10.2018**

(51) International Patent Classification (IPC):
*H01M 10/058* (2010.01)   *H01M 4/58* (2010.01)
*H01M 4/587* (2010.01)   *H01M 10/0525* (2010.01)

(52) Cooperative Patent Classification (CPC):
**H01M 4/587; H01M 4/5825; H01M 10/0525;
H01M 10/058;** Y02E 60/10; Y02P 70/50

(86) International application number:
**PCT/CN2018/112959**

(87) International publication number:
**WO 2019/165795 (06.09.2019 Gazette 2019/36)**

(54) **LITHIUM ION SECONDARY BATTERY AND MANUFACTURING METHOD THEREFOR**

LITHIUM-IONEN-SEKUNDÄRBATTERIE UND HERSTELLUNGSVERFAHREN DAFÜR

BATTERIE SECONDAIRE AU LITHIUM-ION ET SON PROCÉDÉ DE FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.02.2018 CN 201810168626**

(43) Date of publication of application:
**06.01.2021 Bulletin 2021/01**

(73) Proprietor: **Contemporary Amperex Technology
Co., Limited
Jiaocheng District
Ningde City,
Fujian 352100 (CN)**

(72) Inventors:
• **WANG, Guobao
Ningde, Fujian 352100 (CN)**

• **LIU, Jiang
Ningde, Fujian 352100 (CN)**
• **LIU, Xiaomei
Ningde, Fujian 352100 (CN)**
• **XIE, Bin
Ningde, Fujian 352100 (CN)**

(74) Representative: **Studio Torta S.p.A.
Via Viotti, 9
10121 Torino (IT)**

(56) References cited:
CN-A- 101 609 908   CN-A- 105 047 986
CN-A- 105 047 986   CN-A- 105 609 318
CN-A- 106 663 775   US-A1- 2002 018 935
US-A1- 2015 340 691   US-A1- 2016 351 888

**Description**

**TECHNICAL FIELD**

The present invention relates to the field of batteries, and in particular, to a lithium-ion secondary battery and a manufacturing method thereof.

**BACKGROUND**

Among secondary batteries, lithium-ion secondary batteries take a dominant position in the market by virtue of an energy density higher than that of other types of secondary batteries. Among the lithium-ion secondary batteries, a lithium-ion secondary battery that uses lithium iron phosphate as a positive electrode active substance is widely applied to electric bus power systems by virtue of features such as high safety, low cost, and a long life, and has a broad application prospect in the field of large-scale energy storage.

In recent years, considering levelized cost of energy, higher requirements are imposed on the life of lithium-ion secondary batteries. Although lithium iron phosphate is highly stable in structure, a solid electrolyte interphase (SEI) film may be dissolved, repaired and balanced on a surface of a graphite negative electrode. Consequently, active lithium ions available for shuttling between a positive electrode and a negative electrode keep decreasing, thereby inevitably resulting in capacity loss. A lithium-ion secondary battery that uses a lithium titanate as a negative electrode active substance and that uses a lithium iron phosphate as a positive electrode active substance does not generate any SEI film. Therefore, the capacity loss caused by negative-electrode side reactions arising from the dissolution, repair, and balance of the SEI film can be avoided. However, a relatively high voltage platform of the lithium titanate leads to a relatively low discharge voltage platform of the lithium-ion secondary battery, and the energy density is too low. In addition, the expensive unit price of the lithium titanate leads to a too high cost per Wh. Therefore, an effective technology is required to address the long-life issue of the lithium-ion secondary battery.

Currently, main measures for improving the life of the lithium-ion secondary battery include: selecting types of lithium iron phosphates and types of graphite that bring good cycling performance and storage performance; optimizing an electrolyte formula (changing organic solvents and additives), optimizing formulas of a positive electrode film and a negative electrode film, optimizing SEI film forming conditions, and the like. All such measures are taken from the perspective of suppressing the negative-electrode side reactions caused by the dissolution, repair, and balance of the SEI film, and defer the decrease of the active lithium ions by throttling. Therefore, such measures produce limited effects, and achieve about 5000-6000 cycles as a maximum cycling life of the lithium-ion secondary battery. This is far from a desired cycling life of more than 10,000 cycles to be accomplished for long-life electric buses and large-scale energy storage systems.

CN101609908A discloses a lithium ion battery, which comprises a positive plate, a negative plate and electrolyte solution, wherein the positive plate comprises a positive current collector and a positive membrane attached to the positive current collector, the negative plate comprises a negative current collector and a negative membrane attached to the negative current collector, and the negative plate uses a carbon material as active substance. On the same unit area, the ratio of the total reversible capacity of the negative active substance of the negative plate to the total reversible capacity of the positive active substance of the positive plate is more than or equal to 1.4 and less than or equal to 2.4.

**SUMMARY**

In view of the problems in the prior art, an objective of the present invention is to disclose a lithium-ion secondary battery and a manufacturing method thereof. The lithium-ion secondary battery has good cycling performance and storage performance. The present invention is set out in the appended set of claims.

To achieve the above objective, according to an aspect of the present invention, the present invention discloses a lithium-ion secondary battery, including: an electrode assembly; an electrolyte infiltrating the electrode assembly; and a packing shell. The electrode assembly includes a negative electrode plate, a positive electrode plate, and a separator. The negative electrode plate includes a negative electrode current collector and a negative electrode film disposed on a surface of the negative electrode current collector and containing a negative electrode active substance. The positive electrode plate includes a positive electrode current collector and a positive electrode film disposed on a surface of the positive electrode current collector and containing a positive electrode active substance. The separator is disposed as a separation between a negative electrode plate and a positive electrode plate that are adjacent to each other. The negative electrode plate is a prelithiated negative electrode plate, the negative electrode active substance is a carbon-based negative electrode material, and the carbon-based negative electrode material and a pre-intercalated lithium metal in the negative electrode plate are lithiated to form a prelithiated compound $LiC_x$, where x = 12-150. A capacity of a unit area of the negative electrode active substance/a capacity of a unit area of the positive electrode active substance = 1.2-2.1. The capacity of a unit area of the negative electrode active substance/(the capacity of a unit area of the positive electrode active substance + an amount of active lithium deintercalatable from the prelithiated compound $LiC_x$ in a unit area of the negative electrode film) ≥ 1.10.

According to another aspect of the present invention, the present invention discloses a method for manufacturing a lithium-ion secondary battery, applicable to manufacturing a lithium-ion secondary battery according to an aspect of the present invention, and including steps of: coating a surface of a positive electrode current collector with a positive electrode slurry, and obtaining a positive electrode plate after drying; coating a surface of a negative electrode current collector with a negative electrode slurry, then applying a metallic lithium layer to a surface of a negative electrode film after drying, and then assembling together with a separator and a positive electrode plate into an electrode assembly; placing the electrode assembly into a packing shell, injecting an electrolyte, and performing encapsulation, where the metallic lithium layer and a carbon-based negative electrode material in a negative electrode active substance are lithiated under an action of the electrolyte to convert into a prelithiated compound $LiC_x$; and then performing precharging and formation to obtain a finished lithium-ion secondary battery.

Compared with the prior art, the present invention achieves at least the following beneficial effects: after the lithium-ion secondary battery in the present invention is fully charged during use, the negative electrode active substance may have enough vacancies for receiving all lithium ions deintercalated from the positive electrode active substance, and excessive lithium ions are stored at the negative electrode after full discharge. Therefore, capacity loss of the lithium-ion secondary battery can be reduced effectively, and the lithium-ion secondary battery has good cycling performance and storage performance.

## DESCRIPTION OF DRAWINGS

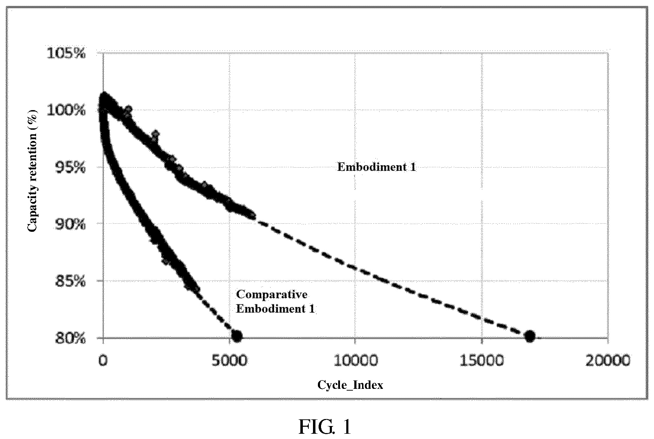

FIG. 1 is a normal-temperature cycling performance curve according to Embodiment 1 and Comparative Embodiment 1.

## DESCRIPTION OF EMBODIMENTS

A lithium-ion secondary battery and a manufacturing method thereof according to the present invention are described in detail below.

First, a lithium-ion secondary battery according to a first aspect of the present invention is described.

The lithium-ion secondary battery according to the first aspect of the present invention includes: an electrode assembly; an electrolyte infiltrating the electrode assembly; and a packing shell. The electrode assembly includes a negative electrode plate, a positive electrode plate, and a separator. The negative electrode plate includes a negative electrode current collector and a negative electrode film disposed on a surface of the negative electrode current collector and containing a negative electrode active substance. The positive electrode plate includes a positive electrode current collector and a positive electrode film disposed on a surface of the positive electrode current collector and containing a positive electrode active substance. The separator is disposed as a separation between a negative electrode plate and a positive electrode plate that are adjacent to each other. The negative electrode plate is a prelithiated negative electrode plate, the negative electrode active substance is a carbon-based negative electrode material, and the carbon-based negative electrode material and a pre-intercalated lithium metal in the negative electrode plate are lithiated to form a prelithiated compound $LiC_x$, where x = 12-150. That is, the carbon-based negative electrode material contained in the negative electrode film exists in the negative electrode film in the form of a prelithiated compound $LiC_x$. A capacity of a unit area of the negative electrode active substance/a capacity of a unit area of the positive electrode active substance = 1.2-2.1. The capacity of a unit area of the negative electrode active substance/(the capacity of a unit area of the positive electrode active substance + an amount of active lithium deintercalatable from the prelithiated compound $LiC_x$ in a unit area of the negative electrode film) ≥ 1.10.

The capacity of a unit area of the negative electrode active substance herein is assumed to be a reversible capacity of the negative electrode active substance (that is, a carbon-based negative electrode material) that has not been lithiated (or into which no lithium has been intercalated), and the capacity of a unit area of the positive electrode active substance is assumed to be a reversible gram capacity of the positive electrode active substance.

The amount of active lithium deintercalatable from the prelithiated compound $LiC_x$ in a unit area of the negative electrode film may be obtained by using the following formula: the amount of active lithium deintercalatable from the prelithiated compound $LiC_x$ in a unit area of the negative electrode film = an amount of active lithium deintercalatable from a unit area of the positive electrode film + an amount of active lithium deintercalatable from a unit area of the negative electrode film - an amount of active lithium intercalatable into a unit area of the positive electrode film.

Specifically, the lithium-ion secondary battery may be fully discharged and then disassembled to obtain a positive electrode plate and a negative electrode plate, and a unit area of the positive electrode plate and a unit area of the negative electrode plate are cut out respectively to undergo the following tests:

combining a unit area of the positive electrode plate and a unit area of a lithium metal plate into a coin half-cell, fully charging at a rate not greater than 0.1C to obtain a charge capacity, that is, the amount of active lithium deintercalatable from a unit area of the positive electrode film; subsequently, statically placing the coin half-cell for a period (exemplarily not shorter than 5 min, and desirably, a period of 5-30 min), and then fully discharging at a rate not greater than 0.1C rate (exemplarily, at a rate equal to the charging rate) to obtain a discharge capacity, that is, the amount of active lithium intercalatable into a unit area of the positive electrode film; and

combining a unit area of the negative electrode plate and a unit area of the lithium metal plate into a coin half-cell, fully charging at a rate not greater than 0.1C to obtain a charge capacity, that is, the amount of active lithium deintercalatable from a unit area of the negative electrode film.

It needs to be noted that the cutting position of the positive electrode plate and the negative electrode plate is not specifically limited, as long as the positive electrode film and the negative electrode film provide full coverage.

In the above test, a charge voltage range and a discharge voltage range are determined according to specific types of the positive active substance and the negative active substance, that is, determined according to a manufacturer-recommended voltage of the purchased positive/negative active substance. Charging/discharging voltages corresponding to different positive/negative active substances vary slightly.

In the above test, the composition of the electrolyte in the assembled coin half-cell and the type of the separator are not specifically limited. Exemplarily, the test is performed under the same conditions as the test of the lithium-ion secondary battery. An effect of the change of the specific type on the calculated amount of active lithium deintercalatable from the prelithiated compound $LiC_x$ in a unit area of the negative electrode film is ignorable.

The foregoing method for calculating the amount of active lithium deintercalatable from the prelithiated compound $LiC_x$ in a unit area of the negative electrode film and the foregoing test method are applicable to both newly manufactured lithium-ion secondary batteries and lithium-ion secondary batteries that have been cycled for several cycles (especially to the batteries whose early cycling capacity fading is small, for example, the lithium-ion secondary batteries whose capacity retention rate after the first 100 cycles is greater than or equal to 98%).

In the lithium-ion secondary battery according to the first aspect of the present invention, the capacity of a unit area of the negative electrode active substance/the capacity of a unit area of the positive electrode active substance = 1.2-2.1; and the capacity of a unit area of the negative electrode active substance/(the capacity of a unit area of the positive electrode active substance + the amount of active lithium deintercalatable from the prelithiated compound $LiC_x$ in a unit area of the negative electrode film) ≥ 1.10. In this way, after the lithium-ion secondary battery is fully charged during use, the negative electrode active substance may have enough vacancies for receiving all lithium ions deintercalated from the positive electrode active substance, and excessive lithium ions are stored at the negative electrode after full discharge. Therefore, capacity loss of the lithium-ion secondary battery can be reduced effectively, and the cycling performance and storage performance of the lithium-ion secondary battery are improved. Exemplarily, the capacity of a unit area of the negative electrode active substance/the capacity of a unit area of the positive electrode active substance = 1.3-2.1.

In the lithium-ion secondary battery according to the first aspect of the present invention, in the prelithiated compound $LiC_x$, when x < 12, the extent of prelithiation is relatively high, and lithium metal residues are likely to occur on the surface of the negative electrode, thereby causing safety hazards; when x > 150, the extent of prelithiation is low, and the effect of improving a cycling life of the lithium-ion secondary battery is not significant. Exemplarily, in the prelithiated compound $LiC_x$, x = 12-50.

In the lithium-ion secondary battery according to the first aspect of the present invention, the negative electrode film may be disposed on one of the surfaces of the negative electrode current collector or on two surfaces of the negative electrode current collector.

In the lithium-ion secondary battery according to the first aspect of the present invention, the carbon-based negative electrode material is selected from one or more of natural graphite, artificial graphite, soft carbon, hard carbon, mesophase carbon microspheres, nanocarbon, or carbon fiber. Exemplarily, the carbon-based negative electrode material is selected from natural graphite, artificial graphite, or a mixture thereof.

In the lithium-ion secondary battery according to the first aspect of the present invention, the negative electrode film further includes a bonding agent and a conductive agent. Specific types of the bonding agent and the conductive agent are not limited, and may be selected according to actual needs. Exemplarily, the bonding agent may be selected from one or more of styrene-butadiene rubber (SBR) or sodium carboxymethyl cellulose (CMC). Exemplarily, the conductive agent may be selected from one or more of conductive carbon black, superconducting carbon black, conductive graphite, acetylene black, Ketjen black, graphene, or carbon nanotube.

In the lithium-ion secondary battery according to the first aspect of the present invention, the positive electrode film may be disposed on one of the surfaces of the positive electrode current collector or on two surfaces of the positive electrode current collector.

In the lithium-ion secondary battery according to the first aspect of the present invention, the positive electrode active substance may be selected from materials into which lithium ions can be intercalated or from which lithium ions can be deintercalated. Exemplarily, the positive electrode active substance may be selected from one or more of: a lithium transition metal oxide, or a compound obtained by adding other transition metals or non-transition metals or non-metals into a lithium transition metal oxide. Specifically, the positive electrode active substance may be selected from one or more of a lithium cobalt oxide, a lithium nickel oxide, a lithium manganese oxide, a lithium nickel manganese oxide, a lithium nickel cobalt manganese oxide, a lithium nickel cobalt aluminum oxide, or an olivine-structured lithium-containing phosphate.

In the lithium-ion secondary battery according to the first aspect of the present invention, exemplarily, the positive electrode active substance is an olivine-structured lithium-containing phosphate. That is because the olivine-structured lithium-containing phosphate is highly stable in structure, and is not likely to lead to capacity loss arising from a structural change that occurs during a cycling process of the lithium-ion secondary battery like other positive electrode active substances. Therefore, the capacity fading of the lithium-ion secondary battery that uses the olivine-structured lithium-containing phosphate mainly stems from the loss of active lithium ions that can shuttle between the positive electrode and the negative electrode inside the battery (for example, participation in the formation of a negative electrode SEI film). Therefore, when the positive electrode active substance is the olivine-structured lithium-containing phosphate, the capacity loss of the lithium-ion secondary battery can be effectively reduced, and the cycling performance and the storage performance of the lithium-ion secondary battery can be greatly improved. Exemplarily, a general formula of the olivine-structured lithium-containing phosphate is $LiFe_{1-x-y}Mn_xM'_yPO_4$, $0 \leq x \leq 1$, $0 \leq y \leq 0.1$, $0 \leq x+y \leq 1$, M' is selected from one or more of transition metal elements or non-transition metal elements other than Fe and Mn, and exemplarily M' is selected from one or more of Cr, Mg, Ti, Al, Zn, W, Nb, and Zr. Desirably, the olivine-structured lithium-containing phosphate is selected from one or more of a lithium iron phosphate, a lithium manganese phosphate, or a lithium manganese iron phosphate.

In the lithium-ion secondary battery according to the first aspect of the present invention, the positive electrode film further includes a conductive agent and a bonding agent. Specific types of the bonding agent and the conductive agent are not limited, and may be selected according to actual needs. Exemplarily, the bonding agent may be selected from one or more of polyvinylidene fluoride (PVDF), polytetrafluoroethylene, vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, or fluorinated acrylate resin. Exemplarily, the conductive agent may be selected from one or more of conductive carbon black, superconducting carbon black, conductive graphite, acetylene black, Ketjen black, graphene, or carbon nanotube.

In the lithium-ion secondary battery according to the first aspect of the present invention, the electrolyte includes a lithium salt, an organic solvent, and an optional additive. The lithium salt may be an organic lithium salt or an inorganic lithium salt. Specifically, the lithium salt may contain at least one of fluorine element, boron element, and phosphorus element. Specifically, the lithium salt may be selected from one or more of a lithium hexafluorophosphate, a lithium tetrafluoroborate, a lithium perchlorate, a lithium hexafluoroarsenate, a lithium tetrafluorooxalate phosphate, $LiN(SO_2R_F)_2$, $LiN(SO_2F)(SO_2R_F)$, a bis(trifluoromethane)sulfonimide, lithium bis(fluorosulfonyl)imide, or a lithium difluoro(oxalato)borate, and exemplarily, one or more of $LiPF_6$ or $LiN(SO_2R_F)_2$, where the substituent $R_F$ is denoted by $C_nF_{2n+1}$, and n is an integer of 1-10. The organic solvent may include: one or more of dimethyl carbonate, diethyl carbonate, ethyl methyl carbonate, methyl propyl carbonate, methyl formate, ethyl formate, methyl acetate, ethyl acetate, propyl propionate, ethyl butyrate, ethyl propionate, or propyl butyrate; and one or more of ethylene carbonate, propylene carbonate, butylene carbonate, vinylene carbonate, vinyl sulfite, propylene sulfite, γ-butyrolactone, or tetrahydrofuran. In addition, the organic solvent may also include different types of ionic liquids, and the like. Moreover, as regards the organic solvents used in this application, one organic solvent may be used alone, or two or more of the organic solvents may be combined arbitrarily or mixed at any ratio as required.

In the lithium-ion secondary battery according to the first aspect of the present invention, the type of the separator is not specifically limited, and may be made of any separator material used in conventional lithium-ion secondary batteries, such as but without limitation polyethylene, polypropylene, poly vinylidene fluoride, or a multilayer composite film thereof.

Secondly, according to a second aspect of the present invention, the present invention discloses a method for manufacturing a lithium-ion secondary battery, applicable to manufacturing a lithium-ion secondary battery according to the first aspect of the present invention, and including steps of: coating a surface of a positive electrode current collector with a positive electrode slurry, and obtaining a positive electrode plate after drying; coating a surface of a negative electrode current collector with a negative electrode slurry, then applying a layer of metallic lithium to a surface of a negative electrode film after drying, and then assembling together with a separator and a positive electrode plate into an electrode assembly; and placing the electrode assembly into a packing shell, injecting an electrolyte, and performing encapsulation, where the metallic lithium and a carbon-based negative electrode material in a negative electrode active substance are lithiated under an action of the electrolyte to convert into a prelithiated compound $LiC_x$; and then performing precharging and formation to obtain a finished lithium-ion secondary battery.

In the method for manufacturing a lithium-ion secondary battery according to the second aspect of the present invention, a weight of the metallic lithium is 0.5%~5% of a total weight of the negative electrode film. A too high content of the metallic lithium is likely to cause lithium plating of the negative electrode.

In the method for manufacturing a lithium-ion secondary battery according to the second aspect of the present invention, the metallic lithium may be disposed on a surface of the negative electrode film by calendering. By using an intermolecular force of the lithium metal and the negative electrode active substance (such as graphite), the metallic lithium is firmly disposed on the surface of the negative electrode film. A form of the metallic lithium may be selected from one or more of lithium powder, lithium ingots, or lithium sheets.

This application is further described below with reference to embodiments. Understandably, the embodiments are only intended to illustrate this application but not to limit the scope of this application.

The lithium-ion secondary battery in Embodiments 1 to 11 and Comparative Embodiments 1 to 7 is manufactured according to the following process:

(1) Manufacturing a positive electrode plate, including:
mixing a lithium iron phosphate (whose reversible gram capacity is 139 mAh/g) as a positive electrode active substance, acetylene black as a conductive agent, and PVDF as a bonding agent at a weight ratio of 94:4:2, adding a solvent N-methylpyrrolidone, fully stirring and homogeneously mixing to obtain a positive electrode slurry, applying the slurry onto two surfaces of aluminum foil used as a positive electrode current collector, and then performing drying and cold calendering to obtain a positive electrode plate.

(2) Manufacturing a negative-electrode plate, including:
mixing artificial graphite (whose reversible gram capacity is 340 mAh/g) as a negative electrode active substance, acetylene black as a conductive agent, and SBR+CMC as a bonding agent at a weight ratio of 95:1.5:3.1:0.4, adding deionized water as a solvent, fully stirring and homogeneously mixing to obtain a negative electrode slurry, applying the slurry onto two surfaces of copper foil used as a negative electrode current collector, performing drying and cold calendering to obtain a negative electrode film, and then compounding a lithium sheet (whose theoretical gram capacity is 3861.3 mAh/g) onto the surface of the negative electrode film through calendering to obtain a negative electrode plate.

(3) Manufacturing an electrolyte, including:
mixing an ethylene carbonate (EC), a propylene carbonate (PC), and a dimethyl carbonate (DMC) at a weight ratio of EC:PC:DMC=3:3:3 in an argon atmosphere glove box with a water content less than 10 ppm to obtain a mixed organic solvent, dissolving a fully dried lithium salt LiPF6 in the mixed organic solvent, and stirring homogeneously to obtain an electrolyte, in which a concentration of $LiPF_6$ is 1 mol/L.

(4) Manufacturing a separator, including:
using a polyethylene porous film with a thickness of 20 $\mu$m as a separator.

(5) Manufacturing a lithium-ion secondary battery, including:
stacking the positive electrode plate, the separator, and the negative electrode plate sequentially, placing the separator between the positive electrode and the negative electrode to serve a function of separation, and winding to obtain an electrode assembly; placing the electrode assembly in a packing shell, injecting a prepared electrolyte and encapsulating the packing shell, and then performing precharging and formation to obtain a finished lithium-ion secondary battery.

**Embodiment 1**

A lithium-ion secondary battery S1 is manufactured according to the above method, in which a coating weight of a negative electrode slurry is 0.120 g/1540.25 $mm^2$ (excluding the weight of a solvent), and a coating weight of a positive electrode slurry is 0.198 g/1540.25 $mm^2$ (excluding the weight of a solvent), and the weight of a lithium sheet is 3.05 mg/1540.25 $mm^2$.

A capacity of a unit area of a negative electrode active substance (assuming that the area is 1540.25 $mm^2$, with a similar assumption applied in subsequent embodiments) = the coating weight in a unit area of the negative electrode $\times$ a weight ratio of the negative electrode active substance $\times$ a reversible gram capacity of the negative electrode active substance = 0.120 g $\times$ 95% $\times$ 340 mAh/g = 38.76 mAh.

A capacity of a unit area of a positive electrode active substance (assuming that the area is 1540.25 mm$^2$, with a similar assumption applied in subsequent embodiments) = the coating weight in a unit area of the positive electrode × a weight ratio of the positive electrode active substance × a reversible gram capacity of the positive electrode active substance = 0.198 g × 94% × 139 mAh/g = 25.87 mAh.

**Embodiment 2**

A lithium-ion secondary battery S2 is manufactured according to the above method, in which a coating weight of a negative electrode slurry is 0.136 g/1540.25 mm$^2$, and a coating weight of a positive electrode slurry is 0.198 g/1540.25 mm$^2$, and the weight of a lithium sheet on a surface of a negative electrode film is 3.05 mg/1540.25 mm$^2$.

A capacity of a unit area of the negative electrode active substance = 0.136 g × 95% × 340 mAh/g = 43.93 mAh.

A capacity of a unit area of the positive electrode active substance = 0.198 g × 94% × 139 mAh/g = 25.87 mAh.

**Embodiment 3**

A lithium-ion secondary battery S3 is manufactured according to the above method, in which a coating weight of a negative electrode slurry is 0.104 g/1540.25 mm$^2$, and a coating weight of a positive electrode slurry is 0.198 g/1540.25 mm$^2$, and the weight of a lithium sheet on a surface of a negative electrode film is 1.52 mg/1540.25 mm$^2$.

A capacity of a unit area of the negative electrode active substance = 0.104 g × 95% × 340 mAh/g = 33.59 mAh.

A capacity of a unit area of the positive electrode active substance = 0.198 g × 94% × 139 mAh/g = 25.87 mAh.

**Embodiment 4**

A lithium-ion secondary battery S4 is manufactured according to the above method, in which a coating weight of a negative electrode slurry is 0.136 g/1540.25 mm$^2$, and a coating weight of a positive electrode slurry is 0.224 g/1540.25 mm$^2$, and the weight of a lithium sheet on a surface of a negative electrode film is 3.45 mg/1540.25 mm$^2$.

A capacity of a unit area of the negative electrode active substance = 0.136 g × 95% × 340 mAh/g = 43.93 mAh.

A capacity of a unit area of the positive electrode active substance = 0.224 g × 94% × 139 mAh/g = 29.27 mAh.

**Embodiment 5**

A lithium-ion secondary battery S5 is manufactured according to the above method, in which a coating weight of a negative electrode slurry is 0.136 g/1540.25 mm$^2$, and a coating weight of a positive electrode slurry is 0.198 g/1540.25 mm$^2$, and the weight of a lithium sheet on a surface of a negative electrode film is 3.45 mg/1540.25 mm$^2$.

A capacity of a unit area of the negative electrode active substance = 0.136 g × 95% × 340 mAh/g = 43.93 mAh.

A capacity of a unit area of the positive electrode active substance = 0.198 g × 94% × 139 mAh/g = 25.87 mAh.

**Embodiment 6**

A lithium-ion secondary battery S6 is manufactured according to the above method, in which a coating weight of a negative electrode slurry is 0.136 g/1540.25 mm$^2$, and a coating weight of a positive electrode slurry is 0.177 g/1540.25 mm$^2$, and the weight of a lithium sheet on a surface of a negative electrode film is 3.45 mg/1540.25 mm$^2$.

A capacity of a unit area of the negative electrode active substance = 0.136 g × 95% × 340 mAh/g = 43.93 mAh.

A capacity of a unit area of the positive electrode active substance = 0.177 × 94% × 139 mAh/g = 23.13 mAh.

**Embodiment 7**

A lithium-ion secondary battery S7 is manufactured according to the above method, in which a coating weight of a negative electrode slurry is 0.136 g/1540.25 mm$^2$, and a coating weight of a positive electrode slurry is 0.259 g/1540.25 mm$^2$, and the weight of a lithium sheet on a surface of the negative electrode film is 1.99 mg/1540.25 mm$^2$.

A capacity of a unit area of the negative electrode active substance = 0.136 g × 95% × 340 mAh/g = 43.93 mAh.

A capacity of a unit area of the positive electrode active substance = 0.259g × 94% × 139 mAh/g = 33.84 mAh.

**Embodiment 8**

A lithium-ion secondary battery S8 is manufactured according to the above method, in which a coating weight of a negative electrode slurry is 0.136 g/1540.25 mm$^2$, and a coating weight of a positive electrode slurry is 0.177 g/1540.25 mm$^2$, and the weight of a lithium sheet on a surface of a negative electrode film is 5.44 mg/1540.25 mm$^2$.

A capacity of a unit area of the negative electrode active substance = 0.136 g × 95% × 340 mAh/g = 43.93 mAh.

A capacity of a unit area of the positive electrode active substance = $0.177 \times 94\% \times 139$ mAh/g = 23.13 mAh.

**Embodiment 9**

A lithium-ion secondary battery S9 is manufactured according to the above method, in which a coating weight of a negative electrode slurry is 0.136 g/1540.25 mm$^2$, and a coating weight of a positive electrode slurry is 0.160 g/1540.25 mm$^2$, and the weight of a lithium sheet on a surface of a negative electrode film is 6.16 mg/1540.25 mm$^2$.

A capacity of a unit area of the negative electrode active substance = $0.136 \text{ g} \times 95\% \times 340$ mAh/g = 43.93 mAh.

A capacity of a unit area of the positive electrode active substance = $0.160 \text{ g} \times 94\% \times 139$ mAh/g = 20.91 mAh.

**Embodiment 10**

A lithium-ion secondary battery S10 is manufactured according to the above method, in which a coating weight of a negative electrode slurry is 0.136 g/1540.25 mm$^2$, and a coating weight of a positive electrode slurry is 0.280 g/1540.25 mm$^2$, and the weight of a lithium sheet on a surface of the negative electrode film is 1.10 mg/1540.25 mm$^2$.

A capacity of a unit area of the negative electrode active substance = $0.136 \text{ g} \times 95\% \times 340$ mAh/g = 43.93 mAh.

A capacity of a unit area of the positive electrode active substance = $0.280 \text{ g} \times 94\% \times 139$ mAh/g = 36.58 mAh.

**Embodiment 11**

A lithium-ion secondary battery S11 is manufactured according to the above method, in which a coating weight of a negative electrode slurry is 0.136 g/1540.25 mm$^2$, and a coating weight of a positive electrode slurry is 0.280 g/1540.25 mm$^2$, and the weight of a lithium sheet on a surface of the negative electrode film is 0.68 mg/1540.25 mm$^2$.

A capacity of a unit area of the negative electrode active substance = $0.136 \text{ g} \times 95\% \times 340$ mAh/g = 43.93 mAh.

A capacity of a unit area of the positive electrode active substance = $0.280 \text{ g} \times 94\% \times 139$ mAh/g = 36.58 mAh.

**Comparative Embodiment 1**

A lithium-ion secondary battery DS1 is manufactured according to the above method, in which no lithium sheet is disposed on a surface of a negative electrode film, a coating weight of a negative electrode slurry is 0.120 g/1540.25 mm$^2$, and a coating weight of a positive electrode slurry is 0.198 g/1540.25 mm$^2$.

A capacity of a unit area of the negative electrode active substance = 0.120 g × 95% × 340 mAh/g = 38.76 mAh.

A capacity of a unit area of the positive electrode active substance = 0.198 g × 94% × 139 mAh/g = 25.87 mAh.

**Comparative Embodiment 2**

A lithium-ion secondary battery DS2 is manufactured according to the above method, in which no lithium sheet is disposed on a surface of a negative electrode film, a coating weight of a negative electrode slurry is 0.094 g/1540.25 $mm^2$, and a coating weight of a positive electrode slurry is 0.198 g/1540.25 $mm^2$.

A capacity of a unit area of the negative electrode active substance = 0.094 g × 95% × 340 mAh/g = 30.36 mAh.

A capacity of a unit area of the positive electrode active substance = 0.198 g × 94% × 139 mAh/g = 25.87 mAh.

**Comparative Embodiment 3**

A lithium-ion secondary battery DS3 is manufactured according to the above method, in which no lithium sheet is disposed on a surface of a negative electrode film, a coating weight of a negative electrode slurry is 0.136 g/1540.25 $mm^2$, and a coating weight of a positive electrode slurry is 0.224 g/1540.25 $mm^2$.

A capacity of a unit area of the negative electrode active substance = 0.136 g × 95% × 340 mAh/g = 43.93 mAh.

A capacity of a unit area of the positive electrode active substance = 0.224 g × 94% × 139 mAh/g = 29.27 mAh.

**Comparative Embodiment 4**

A lithium-ion secondary battery DS4 is manufactured according to the above method, in which no lithium sheet is disposed on a surface of a negative electrode film, a coating weight of a negative electrode slurry is 0.136 g/1540.25 $mm^2$, and a coating weight of a positive electrode slurry is 0.287 g/1540.25 $mm^2$.

A capacity of a unit area of the negative electrode active substance = 0.136 g × 95% × 340 mAh/g = 43.93 mAh.

A capacity of a unit area of the positive electrode active substance = 0.287 g × 94% × 139 mAh/g = 37.50 mAh.

**Comparative Embodiment 5**

A lithium-ion secondary battery DS5 is manufactured according to the above method, in which a coating weight of a negative electrode slurry is 0.136 g/1540.25 mm$^2$, and a coating weight of a positive electrode slurry is 0.280 g/1540.25 mm$^2$, and the weight of a lithium sheet on a surface of the negative electrode film is 1.99 mg/1540.25 mm$^2$.

A capacity of a unit area of the negative electrode active substance = 0.136 g $\times$ 95% $\times$ 340 mAh/g = 43.93 mAh.

A capacity of a unit area of the positive electrode active substance = 0.280 g $\times$ 94% $\times$ 139 mAh/g = 36.58 mAh.

**Comparative Embodiment 6**

A lithium-ion secondary battery DS6 is manufactured according to the above method, in which a coating weight of a negative electrode slurry is 0.104 g/1540.25 mm$^2$, and a coating weight of a positive electrode slurry is 0.198 g/1540.25 mm$^2$, and the weight of a lithium sheet on a surface of the negative electrode film is 3.05 mg/1540.25 mm$^2$.

A capacity of a unit area of the negative electrode active substance = 0.104 g $\times$ 95% $\times$ 340 mAh/g = 33.59 mAh.

A capacity of a unit area of the positive electrode active substance = 0.198 g $\times$ 94% $\times$ 139 mAh/g = 25.87 mAh.

**Comparative Embodiment 7**

A lithium-ion secondary battery DS7 is manufactured according to the above method, in which a coating weight of a negative electrode slurry is 0.136 g/1540.25 mm$^2$, and a coating weight of a positive electrode slurry is 0.287 g/1540.25 mm$^2$, and the weight of a lithium sheet on a surface of a negative electrode film is 3.45 mg/1540.25 mm$^2$.

A capacity of a unit area of the negative electrode active substance = 0.136 g $\times$ 95% $\times$ 340 mAh/g = 43.93 mAh.

A capacity of a unit area of the positive electrode active substance = 0.287 g $\times$ 94% $\times$ 139 mAh/g = 37.50 mAh.

The following describes a test process of the lithium-ion secondary battery.

(1) Testing the amount of active lithium deintercalatable from the prelithiated compound $LiC_x$ in a unit area of the negative electrode film, including:

fully discharging, at a nominal rate of 1C (that is, a current value with which a theoretical capacity is fully discharged within 1h), the finished lithium-ion secondary battery precharged and formed in Embodiments 1 to 11 and Comparative Embodiments 1 to 7, and disassembling the battery to obtain a positive electrode plate and a negative electrode plate, and cutting out a unit area of the positive electrode plate and a unit area of the negative electrode plate for testing;

combining the cut-out unit area of the positive electrode plate, an electrolyte (same as that in Embodiments 1 to 11 and Comparative Embodiments 1 to 7), a separator (same as that in Embodiments 1 to 11 and Comparative Embodiments 1 to 7), and a unit area of a lithium metal sheet into a coin half-cell, fully charging the coin half-cell to 3.75 V at a 0.1C rate to obtain a charge capacity, where the charge capacity is the amount of active lithium deintercalatable from a unit area of the positive electrode film; subsequently, statically placing the coin half-cell for 30 min, and fully discharging the coin half-cell to 2.0 V at a 0.1C rate to obtain a discharge capacity, where the discharge capacity is the amount of active lithium intercalatable into a unit area of the positive electrode film; and

combining the cut-out unit area of the negative electrode plate, an electrolyte (same as that in Embodiments 1 to 11 and Comparative Embodiments 1 to 7), a separator (same as that in Embodiments 1 to 11 and Comparative Embodiments 1 to 7), and a unit area of a lithium metal sheet into a coin half-cell, fully charging the coin half-cell to 1.0V at a 0.1C rate to obtain a charge capacity, where the charge capacity is the amount of active lithium deintercalatable from a unit area of the negative electrode film.

A sum of the amount of active lithium deintercalatable from a unit area of the positive electrode film and the amount of active lithium deintercalatable from a unit area of the negative electrode film, minus the amount of active lithium intercalatable into a unit area of the positive electrode film, is the amount of active lithium deintercalatable from the prelithiated compound $LiC_x$ in a unit area of the negative electrode film.

(2) Method for calculating x in $LiC_x$

$$x = \text{(the capacity of a unit area of the negative electrode active substance/reversible gram capacity of graphite/mole mass of graphite)/(the amount of active lithium deintercalatable from } LiC_x \text{ in a unit area of the negative electrode film/a theoretical gram capacity of lithium metal/mole mass of lithium metal).}$$

(3) Testing normal-temperature cycling performance of the lithium-ion secondary battery, including:

fully discharging, at a temperature of 25°C and a nominal rate of 1C, the finished lithium-ion secondary battery precharged and formed in Embodiment 1 and Comparative Embodiment 1, and then performing a test, where a process of the test is: charging the lithium-ion secondary battery to a 3.65V voltage by using a 1C-rate constant current, and then charging the battery to a 0.05C-rate current by using a 3.65V constant voltage; statically placing the lithium-ion secondary battery for 5 min, and discharging the battery to a 2.5V voltage by using a 1C-rate constant current, thereby completing a charge-discharge cycle, where the discharge capacity at this cycle is a first-cycle discharge capacity; and testing the lithium-ion secondary battery for multiple charge-discharge cycles according to the foregoing method until the discharge capacity of the lithium-ion secondary battery fades to 80%, and recording the quantity of cycles of the lithium-ion secondary battery.

(4) Testing high-temperature cycling performance of the lithium-ion secondary battery, including:

fully discharging, at a temperature of 60°C and a nominal rate of 1C, the finished lithium-ion secondary battery precharged and formed in Embodiments 1 to 11 and Comparative Embodiments 1 to 7, and then performing a test, where a process of the test is: charging the lithium-ion secondary battery to a 3.65V voltage by using a 1C-rate constant current, and then charging the battery to a 0.05C-rate current by using a 3.65V constant voltage; statically placing the lithium-ion secondary battery for 5 min, and discharging the battery to a 2.5V voltage by using a 1C-rate constant current, thereby completing a charge-discharge cycle, where the discharge capacity at this cycle is a first-cycle discharge capacity; and testing the lithium-ion secondary battery for multiple charge-discharge cycles according to the foregoing method, and detecting a discharge capacity at the 500th cycle.

A capacity retention rate of the lithium-ion secondary battery after 500 cycles at 60°C = (the discharge capacity at the 500th cycle/the discharge capacity at the first cycle) × 100%.

(5) Testing storage performance of the lithium-ion secondary battery, including:

fully discharging, at a temperature of 25°C and a nominal rate of 1C, the finished lithium-ion secondary battery precharged and formed in Embodiments 1 to 11 and Comparative Embodiments 1 to 7, and then performing a test, where a process of the test is: charging the lithium-ion secondary battery to a 3.65V voltage by using a 0.5C-rate constant current, and then charging the battery to a 0.05C-rate current by using a 3.65V constant voltage; statically placing the lithium-ion secondary battery for 5 min, and discharging the battery to a 2.5V voltage by using a 0.5C-rate constant current, where a discharge capacity at this cycle is a before-storage discharge capacity; subsequently, fully charging the lithium-ion secondary battery by using a 0.5C-rate charge current, statically placing the battery at 60°C for 90 days, and then removing the battery and statically placing the battery at 25°C for 2 hours; discharging the battery to a 2.5V voltage by using a 0.5C-rate constant current, statically placing the battery for 5 min, charging the battery to a 3.65V voltage by using a 0.5C-rate constant current, and then charging the battery to a 0.05C-rate current by using a 3.65V constant voltage; statically placing the battery for 5 min, and discharging the lithium-ion secondary battery to a 2.5V voltage by using a 0.5C-rate constant current, where a discharge charge at this moment is a discharge capacity measured after 90 days of storage.

A capacity retention rate of the lithium-ion secondary battery after 90 days of storage at 60°C = (the discharge capacity after 90 days of storage/before-storage discharge capacity) × 100%.

**Table 1 Parameters in Embodiments 1 to 11 and Comparative Embodiments 1 to 7**

| | $LiC_x$ | Amoun-t of active lithium deinterc -alatabl -e from a unit area of positive electrod -e film (mAh) | Amoun-t of active lithium deinterc -alatabl -e from a unit area of negativ -e electrod -e film (mAh) | Amou -nt of active lithium intercalatab -le into a unit area of positive electrode film (mAh) | Amoun -t of active lithium deinterc -alatabl -e from $LiC_x$ in a unit area of negativ -e electrod -e film (mAh) | Capacit -y of a unit area of negativ -e electrod -e active substan -ce (mAh) | Capacit -y of a unit area of positive electrod -e active substan -ce (mAh) | Formula 1 | Formula 2 |
|---|---|---|---|---|---|---|---|---|---|
| Comparative Embodiment 1 | / | 27.55 | 0 | 27.68 | / | 38.76 | 25.87 | 1.50 | 1.50 |
| Comparative Embodiment 2 | / | 27.55 | 0 | 27.68 | / | 30.36 | 25.87 | 1.17 | 1.17 |
| Comparative Embodiment 3 | / | 31.17 | 0 | 31.32 | / | 43.93 | 29.27 | 1.50 | 1.50 |
| Comparative Embodiment 4 | / | 39.93 | 0 | 40.13 | / | 43.93 | 37.50 | 1.17 | 1.17 |
| Comparative Embodiment 5 | $LiC_{48}$ | 38.95 | 6.15 | 39.14 | 5.95 | 43.93 | 36.58 | 1.20 | 1.03 |
| Comparative Embodiment 6 | $LiC_{24}$ | 27.55 | 9.42 | 27.68 | 9.28 | 33.59 | 25.87 | 1.30 | 0.96 |
| Comparative Embodiment 7 | $LiC_{27}$ | 39.93 | 10.66 | 40.13 | 10.46 | 43.93 | 37.50 | 1.17 | 0.92 |
| Embodiment 1 | $LiC_{27}$ | 27.55 | 9.42 | 27.68 | 9.28 | 38.76 | 25.87 | 1.50 | 1.10 |
| Embodiment 2 | $LiC_{31}$ | 27.55 | 9.42 | 27.68 | 9.28 | 43.93 | 25.87 | 1.70 | 1.25 |

14

| | LiCx | Amount of active lithium deintercalatable from a unit area of positive electrode film (mAh) | Amount of active lithium deintercalatable from a unit area of negative electrode film (mAh) | Amount of active lithium intercalatable into a unit area of positive electrode film (mAh) | Amount of active lithium deintercalatable from LiCx in a unit area of negative electrode film (mAh) | Capacity of a unit area of negative electrode active substance (mAh) | Capacity of a unit area of positive electrode active substance (mAh) | Formula 1 | Formula 2 |
|---|---|---|---|---|---|---|---|---|---|
| Embodiment 3 | LiC$_{48}$ | 27.55 | 4.70 | 27.68 | 4.56 | 33.59 | 25.87 | 1.30 | 1.10 |
| Embodiment 4 | LiC$_{27}$ | 31.17 | 10.66 | 31.32 | 10.50 | 43.93 | 29.27 | 1.50 | 1.10 |
| Embodiment 5 | LiC$_{27}$ | 27.55 | 10.66 | 27.68 | 10.52 | 43.93 | 25.87 | 1.70 | 1.21 |
| Embodiment 6 | LiC$_{27}$ | 24.63 | 10.66 | 24.75 | 10.54 | 43.93 | 23.13 | 1.90 | 1.30 |
| Embodiment 7 | LiC$_{48}$ | 36.03 | 6.15 | 36.21 | 5.97 | 43.93 | 33.84 | 1.30 | 1.10 |
| Embodiment 8 | LiC$_{17}$ | 24.63 | 16.81 | 24.75 | 16.68 | 43.93 | 23.13 | 1.90 | 1.10 |
| Embodiment 9 | LiC$_{15}$ | 22.26 | 19.03 | 22.38 | 18.92 | 43.93 | 20.91 | 2.10 | 1.10 |
| Embodiment 10 | LiC$_{90}$ | 38.95 | 3.40 | 39.14 | 3.20 | 43.93 | 36.58 | 1.20 | 1.10 |
| Embodiment 11 | LiC$_{150}$ | 38.95 | 2.10 | 39.14 | 1.91 | 43.93 | 36.58 | 1.20 | 1.14 |

Note:

Formula 1 = a capacity of a unit area of the negative electrode active substance/a capacity of a unit area of the positive electrode active substance; and

Formula 2 = the capacity of a unit area of the negative electrode active substance/(the capacity of a unit area of the positive electrode active substance + an amount of active lithium deintercalatable from the prelithiated compound $LiC_x$ in a unit area of the negative electrode film).

**Table 2 Performance test results in Embodiments 1 to 11 and Comparative Embodiments 1 to 7**

| | Capacity retention rate after 500 cycles at 60°C | Capacity retention rate after 90 days of storage at 60°C |
|---|---|---|
| Comparative Embodiment 1 | 86.9% | 84.8% |
| Comparative Embodiment 2 | 84.6% | 85.1% |
| Comparative Embodiment 3 | 85.6% | 84.7% |
| Comparative Embodiment 4 | 85.5% | 85.7% |
| Comparative Embodiment 5 | N/A (dive) | N/A (dive) |
| Comparative Embodiment 6 | N/A (dive) | N/A (dive) |
| Comparative Embodiment 7 | N/A (dive) | N/A (dive) |
| Embodiment 1 | 98.3% | 97.7% |
| Embodiment 2 | 98.0% | 98.1% |
| Embodiment 3 | 91.0% | 92.3% |
| Embodiment 4 | 98.0% | 97.3% |
| Embodiment 5 | 97.4% | 97.8% |
| Embodiment 6 | 97.1% | 98.1% |
| Embodiment 7 | 90.1% | 91.2% |
| Embodiment 8 | 101.0% | 102.2% |
| Embodiment 9 | 101.1% | 102.4% |
| Embodiment 10 | 88.4% | 88.7% |
| Embodiment 11 | 87.2% | 86.2% |

FIG. 1 is a normal-temperature cycling performance curve according to Embodiment 1 and Comparative Embodiment 1. As can be seen from FIG. 1, the lithium-ion secondary battery in Comparative Embodiment 1 is expected to run for a maximum of approximately 6000 cycles when the capacity of the battery fades to 80% in a normal temperature environment. By contrast, the lithium-ion secondary battery in Embodiment 1 still has a 90% reversible discharge capacity after 6000 cycles, and is expected to run for approximately 16000 cycles when the capacity fades to 80%, and therefore, can meet the needs of long-life electric buses and large-scale energy storage systems.

As can be seen from comparison with Comparative Embodiments 1 to 2, on condition that the capacity of the positive electrode active substance is constant, the cycling life and the shelf life of the lithium-ion secondary battery are scarcely improved by increasing the coating weight of the negative electrode and thus increasing the capacity of the negative electrode active substance, and still can hardly meet the needs. As can be learned from the comparison with Embodiments 1 to 2, after the metallic lithium layer is disposed on the surface of the negative electrode film, the cycling life and the shelf life of the lithium-ion secondary battery are significantly improved.

As can be seen from comparison with Comparative Embodiments 3 to 4, on condition that the capacity of the negative electrode active substance is constant, the cycling life and the shelf life of the lithium-ion secondary battery are scarcely improved by decreasing the coating weight of the positive electrode and thus decreasing the capacity of the positive electrode active substance. As can be learned from the comparison with Embodiments 4 to 6, after the metallic lithium layer is disposed on the surface of the negative electrode film, the cycling life and the shelf life of the lithium-ion secondary battery are significantly improved.

In Comparative Embodiments 5 to 7, if the ratio in Formula 2 is too low, both the cycling performance and the storage performance of the lithium-ion secondary battery are poor. That is because, with the ratio being too low, the capacities of the positive and negative electrode active substances do not match the amount of active lithium deintercalatable from the prelithiated compound $LiC_x$. After full charging, the negative electrode active substance lacks enough vacancies for receiving all lithium ions deintercalated from the positive electrode active substance. Consequently, lithium plating occurs on the negative electrode, gas expansion and liquid leakage occur on the lithium-ion secondary battery, so that the cycling performance and the storage performance of the lithium-ion secondary battery are deteriorated.

Next, the composition of the electrolyte and the separator of the coin half-cell is changed to study the impact thereby caused onto the amount of active lithium deintercalatable from $LiC_x$ in Embodiment 1.

In Test 1:

a process of manufacturing the electrolyte is: mixing EC, PC, and DMC at a weight ratio of EC:PC:DMC=2:2:4 in an argon atmosphere glove box with a water content less than 10 ppm to obtain a mixed organic solvent, dissolving a fully dried lithium salt $LiN(SO_2CF_3)_2$ in the mixed organic solvent, and stirring homogeneously to obtain an electrolyte, in which a concentration of $LiN(SO_2CF_3)_2$ is 1 mol/L; and
a polypropylene porous film with a thickness of 20 $\mu$m is used as a separator.

In Test 2:

a process of manufacturing the electrolyte is: mixing EC, PC, and DMC at a weight ratio of EC:PC:DMC=4:2:2 in an argon atmosphere glove box with a water content less than 10 ppm to obtain a mixed organic solvent, dissolving a fully dried lithium salt $LiPF_6$ in the mixed organic solvent, and stirring homogeneously to obtain an electrolyte, in which a concentration of $LiPF_6$ is 1 mol/L; and
a polypropylene porous film with a thickness of 20 $\mu$m is used as a separator.

In Test 3:

a process of manufacturing the electrolyte is: mixing EC, PC, and DMC at a weight ratio of EC:PC:DMC=3:3:3 in an argon atmosphere glove box with a water content less than 10 ppm to obtain a mixed organic solvent, dissolving a fully dried lithium salt $LiPF_6$ in the mixed organic solvent, and stirring homogeneously to obtain an electrolyte, in which a concentration of $LiPF_6$ is 1 mol/L; and
a polypropylene porous film with a thickness of 20 $\mu$m is used as a separator.

In Test 4:

a process of manufacturing the electrolyte is: mixing EC, PC, and DMC at a weight ratio of EC:PC:DMC=3:3:3 in an argon atmosphere glove box with a water content less than 10 ppm to obtain a mixed organic solvent, dissolving a fully dried lithium salt $LiPF_6$ in the mixed organic solvent, and stirring homogeneously to obtain an electrolyte, in which a concentration of $LiPF_6$ is 0.8 mol/L; and
a polyethylene porous film with a thickness of 20 $\mu$m is used as a separator.

In Test 5:

a process of manufacturing the electrolyte is: mixing EC, PC, and DMC at a weight ratio of EC:PC:DMC=2:2:4 in an argon atmosphere glove box with a water content less than 10 ppm to obtain a mixed organic solvent, dissolving a fully dried lithium salt $LiPF_6$ in the mixed organic solvent, and stirring homogeneously to obtain an electrolyte, in which a concentration of $LiPF_6$ is 1.2 mol/L; and
a polyethylene porous film with a thickness of 20 $\mu$m is used as a separator.

**Table 3 Effects of different electrolyte compositions on the amount of active lithium deintercalatable from $LiC_x$**

|  | Amount of active lithium deintercalatable from a unit area of positive electrode film (mAh) | Amount of active lithium deintercalatable from a unit area of negative electrode film (mAh) | Amount of active lithium intercalatable into a unit area of positive electrode film (mAh) | Amount of active lithium deintercalatable from LiCx in a unit area of negative electrode film (mAh) |
|---|---|---|---|---|
| Embodiment 1 | 27.55 | 9.42 | 27.68 | 9.28 |
| Test 1 | 27.54 | 9.40 | 27.64 | 9.30 |
| Test 2 | 27.56 | 9.39 | 27.66 | 9.29 |
| Test 3 | 27.55 | 9.44 | 27.70 | 9.29 |
| Test 4 | 27.57 | 9.44 | 27.69 | 9.32 |
| Test 5 | 27.53 | 9.43 | 27.71 | 9.25 |

As can be seen from Table 3, the impact caused by the change of the electrolyte composition and the separator type onto the amount of active lithium deintercalatable from a unit area of the positive electrode film, the amount of active lithium deintercalatable from a unit area of the negative electrode film, the amount of active lithium intercalatable into a unit area of the positive electrode film, and the amount of active lithium deintercalatable from the prelithiated compound $LiC_x$ in a unit area of the negative electrode film is ignorable. In the tests of this application, in a case of assembling a coin half-cell, the compositions of the electrolyte and the separator are the same as those of a full cell.

**Claims**

1. A lithium-ion secondary battery, **characterized by** comprising: an electrode assembly; an electrolyte infiltrating the electrode assembly; and a packing shell, wherein

   the electrode assembly comprises:

   a negative electrode plate, comprising a negative electrode current collector and a negative electrode film disposed on a surface of the negative electrode current collector and containing a negative electrode active substance;
   a positive electrode plate, comprising a positive electrode current collector and a positive electrode film disposed on a surface of the positive electrode current collector and containing a positive electrode active substance; and
   a separator, disposed as a separation between a negative electrode plate and a positive electrode plate that are adjacent to each other, wherein

   the negative electrode plate is a prelithiated negative electrode plate, the negative electrode active substance is a carbon-based negative electrode material, and the carbon-based negative electrode material and a pre-intercalated lithium metal in the negative electrode plate are lithiated to form a prelithiated compound $LiC_x$, wherein x = 12-150, and x is measured by the corresponding method in the description;
   a capacity of a unit area of the negative electrode active substance/a capacity of a unit area of the positive electrode active substance = 1.2-2.1, as measured by the corresponding method in the description; and
   the capacity of a unit area of the negative electrode active substance/(the capacity of a unit area of the positive electrode active substance + an amount of active lithium deintercalatable from the prelithiated compound $LiC_x$ in a unit area of the negative electrode film) $\geq$ 1.10, as measured by the corresponding method in the description; wherein the amount of active lithium deintercalatable from the prelithiated compound $LiC_x$ in a unit area of the negative electrode film = an amount of active lithium deintercalatable from a unit area of the positive electrode film + an amount of active lithium deintercalatable from a unit area of the negative electrode film - an amount of active lithium intercalatable into a unit area of the positive electrode film;

the lithium-ion secondary battery is fully discharged and then disassembled to obtain the positive electrode plate and the negative electrode plate, and a unit area of the positive electrode plate and a unit area of the negative electrode plate are cut out respectively to undergo the following tests:

combining a unit area of the positive electrode plate and a unit area of a lithium metal plate into a coin half-cell, fully charging at a rate not greater than 0.1C to obtain a charge capacity, that is, the amount of active lithium deintercalatable from a unit area of the positive electrode film; subsequently, statically placing the coin half-cell for a period, and then fully discharging at a rate not greater than 0.1C rate to obtain a discharge capacity, that is, the amount of active lithium intercalatable into a unit area of the positive electrode film; and combining a unit area of the negative electrode plate and a unit area of the lithium metal plate into a coin half-cell, fully charging at a rate not greater than 0.1C to obtain a charge capacity, that is, the amount of active lithium deintercalatable from a unit area of the negative electrode film.

2. The lithium-ion secondary battery according to claim 1, wherein the carbon-based negative electrode material is selected from one or more of natural graphite, artificial graphite, soft carbon, hard carbon, mesophase carbon microspheres, nanocarbon, and carbon fiber.

3. The lithium-ion secondary battery according to claim 1, wherein the carbon-based negative electrode material is selected from natural graphite, artificial graphite, or a mixture thereof.

4. The lithium-ion secondary battery according to claim 1, wherein the positive electrode active substance is selected from one or more of a lithium cobalt oxide, a lithium nickel oxide, a lithium manganese oxide, a lithium nickel manganese oxide, a lithium nickel cobalt manganese oxide, a lithium nickel cobalt aluminum oxide, and an olivine-structured lithium-containing phosphate.

5. The lithium-ion secondary battery according to claim 1, wherein the positive electrode active substance is an olivine-structured lithium-containing phosphate.

6. The lithium-ion secondary battery according to claim 1, wherein in the prelithiated compound $LiC_x$, x = 12-50.

7. The lithium-ion secondary battery according to claim 1, wherein a capacity of a unit area of the negative electrode active substance/a capacity of a unit area of the positive electrode active substance = 1.3-2.1.

8. A method for manufacturing a lithium-ion secondary battery according to any one of claims 1 to 7, and **characterized by** comprising steps of:

coating a surface of a positive electrode current collector with a positive electrode slurry, and obtaining a positive electrode plate after drying;
coating a surface of a negative electrode current collector with a negative electrode slurry, then applying a layer of metallic lithium to a surface of a negative electrode film after drying, and then assembling together with a separator and a positive electrode plate into an electrode assembly; and
placing the electrode assembly into a packing shell, injecting an electrolyte, and performing encapsulation, wherein the metallic lithium and a carbon-based negative electrode material in a negative electrode active substance are lithiated under an action of the electrolyte to convert into a prelithiated compound $LiC_x$; and then performing precharging and formation to obtain a finished lithium-ion secondary battery.

9. The lithium-ion secondary battery manufacturing method according to claim 8, wherein a weight of the metallic lithium is 0.5%-5% of a total weight of the negative electrode film.

10. The lithium-ion secondary battery manufacturing method according to claim 8, wherein a form of the metallic lithium is selected from one or more of lithium powder, lithium ingots, or lithium sheets.

**Patentansprüche**

1. Lithium-Ionen-Sekundärbatterie, **dadurch gekennzeichnet, dass** sie umfasst: eine Elektrodenanordnung; einen Elektrolyten, der in die Elektrodenanordnung eindringt; und ein Verpackungsgehäuse, wobei die Elektrodenanordnung umfasst:

   eine negative Elektrodenplatte, die einen Stromkollektor der negativen Elektrode und einen negativen Elektrodenfilm umfasst, der auf einer Oberfläche des Stromkollektors der negativen Elektrode angeordnet ist und eine Aktivsubstanz der negativen Elektrode enthält;
   eine positive Elektrodenplatte, die einen Stromkollektor der positiven Elektrode und einen positiven Elektrodenfilm umfasst, der auf einer Oberfläche des Stromkollektors der positiven Elektrode angeordnet ist und eine Aktivsubstanz der positiven Elektrode enthält; und
   einen Separator, der als Trennung zwischen einer negativen Elektrodenplatte und einer positiven Elektrodenplatte, die nebeneinander liegen, angeordnet ist, wobei
   es sich bei der negativen Elektrodenplatte um eine vorlithiierte negative Elektrodenplatte handelt, die Aktivsubstanz der negativen Elektrode ein kohlenstoffbasiertes negatives Elektrodenmaterial ist, und das kohlenstoffbasierte negative Elektrodenmaterial und ein vorinterkaliertes Lithiummetall in der negativen Elektrodenplatte lithiiert sind, sodass sie eine vorlithiierte Verbindung $LiC_x$ bilden, wobei x = 12-150, und x nach dem entsprechenden Verfahren in der Beschreibung gemessen wird;
   eine Kapazität einer Flächeneinheit der Aktivsubstanz der negativen Elektrode / eine Kapazität einer Flächeneinheit der Aktivsubstanz der positiven Elektrode = 1,2-2,1, nach dem entsprechenden Verfahren in der Beschreibung gemessen; und
   die Kapazität einer Flächeneinheit der Aktivsubstanz der negativen Elektrode / (die Kapazität einer Flächeneinheit der Aktivsubstanz der positiven Elektrode + eine Menge aktiven Lithiums, die in einer Flächeneinheit des negativen Elektrodenfilms aus der vorlithiierten Verbindung $LiC_x$ deinterkaliert werden kann) $\geq$ 1,10, nach dem entsprechenden Verfahren in der Beschreibung gemessen;
   wobei die Menge aktiven Lithiums, die in einer Flächeneinheit des negativen Elektrodenfilms aus der vorlithiierten Verbindung $LiC_x$ deinterkaliert werden kann = eine Menge aktiven Lithiums, die aus einer Flächeneinheit des positiven Elektrodenfilms deinterkaliert werden kann + eine Menge aktiven Lithiums, die aus einer Flächeneinheit des negativen Elektrodenfilms deinterkaliert werden kann - eine Menge aktiven Lithiums, die in eine Flächeneinheit des positiven Elektrodenfilms interkaliert werden kann;
   die Lithium-Ionen-Sekundärbatterie vollständig entladen und dann zerlegt wird, um die positive Elektrodenplatte und die negative Elektrodenplatte zu erhalten, und jeweils eine Flächeneinheit der positiven Elektrodenplatte und eine Flächeneinheit der negativen Elektrodenplatte ausgeschnitten und den folgenden Tests unterzogen werden:

   Kombinieren einer Flächeneinheit der positiven Elektrodenplatte und einer Flächeneinheit einer Lithiummetallplatte zu einer Knopfhalbzelle, vollständiges Laden mit einer Rate von nicht größer als 0,1 C, um eine Ladekapazität, das heißt die Menge aktiven Lithiums, die aus einer Flächeneinheit des positiven Elektrodenfilms deinterkaliert werden kann, zu erhalten; anschließend Statischhalten der Knopfhalbzelle über einen Zeitraum, und dann vollständiges Entladen mit einer Rate von nicht größer als 0,1 C, um eine Entladekapazität, das heißt die Menge aktiven Lithiums, die in eine Flächeneinheit des positiven Elektrodenfilms interkaliert werden kann, zu erhalten; und
   Kombinieren einer Flächeneinheit der negativen Elektrodenplatte und einer Flächeneinheit der Lithiummetallplatte zu einer Knopfhalbzelle, vollständiges Laden mit einer Rate von nicht größer als 0,1 C, um eine Ladekapazität, das heißt die Menge aktiven Lithiums, die aus einer Flächeneinheit des negativen Elektrodenfilms deinterkaliert werden kann, zu erhalten.

2. Lithium-Ionen-Sekundärbatterie nach Anspruch 1, wobei das kohlenstoffbasierte negative Elektrodenmaterial ausgewählt ist aus einem oder mehreren aus natürlichem Graphit, künstlichem Graphit, weichem Kohlenstoff, hartem Kohlenstoff, Mesophasen-Kohlenstoff-Mikrokügelchen, Nanokohlenstoff und Kohlenstofffaser.

3. Lithium-Ionen-Sekundärbatterie nach Anspruch 1, wobei das kohlenstoffbasierte negative Elektrodenmaterial ausgewählt ist aus natürlichem Graphit, künstlichem Graphit oder einer Mischung davon.

4. Lithium-Ionen-Sekundärbatterie nach Anspruch 1, wobei die Aktivsubstanz der positiven Elektrode ausgewählt ist aus einem oder mehreren aus einem Lithium-KobaltOxid, einem Lithium-Nickel-Oxid, einem Lithium-Mangan-Oxid, einem Lithium-Nickel-Mangan-Oxid, einem Lithium-Nickel-Kobalt-Mangan-Oxid, einem Lithium-Nickel-Kobalt-Aluminium-Oxid und einem lithiumhaltigen Phosphat mit Olivin-Struktur.

5. Lithium-Ionen-Sekundärbatterie nach Anspruch 1, wobei es sich bei der Aktivsubstanz der positiven Elektrode um ein lithiumhaltiges Phosphat mit Olivin-Struktur handelt.

6. Lithium-Ionen-Sekundärbatterie nach Anspruch 1, wobei in der vorlithiierten Verbindung $LiC_x$, x = 12-50.

7. Lithium-Ionen-Sekundärbatterie nach Anspruch 1, wobei eine Kapazität einer Flächeneinheit der Aktivsubstanz der negativen Elektrode / eine Kapazität einer Flächeneinheit der Aktivsubstanz der positiven Elektrode = 1,3-2,1.

8. Verfahren zur Herstellung einer Lithium-Ionen-Sekundärbatterie nach einem der Ansprüche 1 bis 7 und **dadurch gekennzeichnet, dass** es die folgenden Schritte umfasst:

Beschichten einer Oberfläche eines Stromkollektors der positiven Elektrode mit einer Paste für die positive Elektrode und Erhalten einer positiven Elektrodenplatte nach dem Trocknen;
Beschichten einer Oberfläche eines Stromkollektors der negativen Elektrode mit einer Paste für die negative Elektrode, dann Aufbringen einer Schicht aus metallischem Lithium auf eine Oberfläche eines negativen Elektrodenfilms nach dem Trocknen, und dann Zusammenbauen mit einem Separator und einer positiven Elektrodenplatte zu einer Elektrodenanordnung; und
Einsetzen der Elektrodenanordnung in ein Verpackungsgehäuse, Einspritzen eines Elektrolyten, und Durchführen einer Verkapselung, wobei das metallische Lithium und ein kohlenstoffbasiertes negatives Elektrodenmaterial in einer Aktivsubstanz der negativen Elektrode unter Einwirkung des Elektrolyten so lithiiert werden, dass sie sich zu einer vorlithiierten Verbindung $LiC_x$ umwandeln; und dann Durchführen eines Vorladens und Formierens, um eine fertige Lithium-Ionen-Sekundärbatterie zu erhalten.

9. Verfahren zur Herstellung einer Lithium-Ionen-Sekundärbatterie nach Anspruch 8, wobei ein Gewicht des metallischen Lithiums 0,5 % - 5 % eines Gesamtgewichts des negativen Elektrodenfilms ausmacht.

10. Verfahren zur Herstellung einer Lithium-Ionen-Sekundärbatterie nach Anspruch 8, wobei eine Form des metallischen Lithiums ausgewählt ist aus einem oder mehreren aus Lithiumpulver, Lithiumbarren oder Lithiumblechen.


**Revendications**

1. Batterie secondaire au lithium-ion, **caractérisé en ce qu'**elle comprend : un ensemble électrode ; un électrolyte infiltrant l'ensemble électrode ; et une coquille enveloppante, dans laquelle
l'ensemble électrode comprend :

une feuille d'électrode négative, comprenant un collecteur de courant d'électrode négative et un film d'électrode négative disposé sur une surface du collecteur de courant d'électrode négative et contenant une substance active d'électrode négative ;
une feuille d'électrode positive, comprenant un collecteur de courant d'électrode positive et un film d'électrode positive disposé sur une surface du collecteur de courant d'électrode positive et contenant une substance active d'électrode positive ; et
un séparateur, disposé en tant que séparation entre une feuille d'électrode négative et une feuille d'électrode positive qui sont adjacentes l'une à l'autre, dans laquelle
la feuille d'électrode négative est une feuille d'électrode négative prélithiée, la substance active d'électrode négative est un matériau d'électrode négative à base de carbone, et le matériau d'électrode négative à base de carbone et un métal de lithium pré-intercalé dans la feuille d'électrode négative sont prélithiés pour former un composé prélithié $LiC_x$, dans laquelle x = 12-150, et x est mesuré par le procédé correspondant dans la description ;
une capacité d'une zone unitaire de la substance active d'électrode négative/une capacité d'une zone unitaire de la substance active d'électrode positive = 1,2-2,1, comme mesuré par le procédé correspondant dans la description ; et
la capacité d'une zone unitaire de la substance active d'électrode négative/(la capacité d'une zone unitaire de la substance active d'électrode positive + une quantité de lithium actif désintercalable à partir du composé prélithié $LiC_x$ dans une zone unitaire du film d'électrode négative) $\geq$ 1,10, comme mesuré par le procédé correspondant dans la description ;

dans laquelle la quantité de lithium actif désintercalable à partir du composé prélithié $LiC_x$ dans une zone unitaire du film d'électrode négative = une quantité de lithium actif désintercalable à partir d'une zone unitaire du film d'électrode positive + une quantité de lithium actif désintercalable à partir d'une zone unitaire du film d'électrode négative - une quantité de lithium actif intercalable dans une zone unitaire du film d'électrode positive ;
la batterie secondaire au lithium-ion est complètement déchargée et ensuite désassemblé pour obtenir la feuille d'électrode positive et la feuille d'électrode négative, et une zone unitaire de la feuille d'électrode positive et une zone unitaire de la feuille d'électrode négative sont respectivement retirées pour être soumises aux tests suivants :

la combinaison d'une zone unitaire de la feuille d'électrode positive et d'une zone unitaire de la feuille métallique de lithium dans une demi-cellule présentant la dimension d'une pièce, complètement chargée à un taux pas supérieur à 0,1 C pour obtenir une capacité de charge, qui est, la quantité de lithium actif désintercalable à partir d'une zone unitaire du film d'électrode positive ; ensuite, le placement statique de la demi-cellule présentant la dimension d'une pièce pendant une période, et ensuite le déchargement complet à un taux pas supérieur à 0,1 C pour obtenir une capacité de décharge, qui est, la quantité de lithium actif intercalable dans une zone unitaire du film d'électrode positive ; et
la combinaison d'une zone unitaire de la feuille d'électrode négative et d'une zone unitaire de la feuille métallique de lithium dans une demi-cellule présentant la dimension d'une pièce, la charge complète à un taux pas supérieur à 0,1 C pour obtenir une capacité de charge, qui est, la quantité de lithium actif désintercalable à partir d'une zone unitaire du film d'électrode négative.

2. Batterie secondaire au lithium-ion selon la revendication 1, dans laquelle le matériau d'électrode négative à base de carbone est choisi à partir d'un ou plusieurs parmi le graphite naturel, le graphite artificiel, le carbone doux, le carbone dur, les microsphères de carbone mésophase, le nanocarbone, et la fibre de carbone.

3. Batterie secondaire au lithium-ion selon la revendication 1, dans laquelle le matériau d'électrode négative à base de carbone est choisi parmi le graphite naturel, le graphite artificiel, ou un mélange de ceux-ci.

4. Batterie secondaire au lithium-ion selon la revendication 1, dans laquelle la substance active d'électrode positive est choisie parmi un ou plusieurs parmi un oxyde de cobalt-lithium, un oxyde de nickel-lithium, un oxyde de manganèse-lithium, un oxyde de manganèse-nickel-lithium, un oxyde de manganèse-cobalt-nickel-lithium, un oxyde d'aluminium-cobalt-nickel-lithium, et un phosphate contenant du lithium à structure olivine.

5. Batterie secondaire au lithium-ion selon la revendication 1, dans laquelle la substance active d'électrode positive est un phosphate contenant du lithium à structure d'olivine.

6. Batterie secondaire au lithium-ion selon la revendication 1, dans laquelle dans le composé prévu $LiC_x$, x = 12-50.

7. Batterie secondaire au lithium-ion selon la revendication 1, dans laquelle une capacité d'une zone unitaire de la substance active d'électrode négative/une capacité d'une zone unitaire de la substance active d'électrode positive = 1,3-2,1.

8. Procédé de fabrication d'une batterie secondaire au lithium-ion selon l'une quelconque des revendications 1 à 7, et **caractérisé en ce qu'**il comprend les étapes suivantes :

le revêtement d'une surface d'un collecteur de courant d'électrode positive avec une suspension d'électrode positive, et l'obtention d'une feuille d'électrode positive après le séchage ;
le revêtement d'une surface d'un collecteur de courant d'électrode négative avec une suspension d'électrode négative, puis l'application d'une couche de lithium métallique sur une surface d'un film d'électrode négative après le séchage, et ensuite l'assemblage avec un séparateur et une feuille d'électrode positive dans un ensemble électrode ; et
le placement de l'ensemble électrode dans une coquille enveloppante, l'injection d'un électrolyte, et la réalisation d'une encapsulation, dans lequel le lithium métallique et le matériau d'électrode négative à base de carbone dans une substance active d'électrode négative sont lithiés sous une action de l'électrolyte pour être convertis en un composé prolithié $LiC_x$; et ensuite la réalisation d'un préchargement et d'une formation pour obtenir une batterie secondaire lithium-ion terminée.

9. Procédé de fabrication d'une batterie secondaire au lithium-ion selon la revendication 8, dans lequel un poids du lithium métallique est 0,5 %-5 % d'un poids total du film d'électrode négative.

10. Procédé de fabrication d'une batterie secondaire au lithium-ion selon la revendication 8, dans lequel une forme du lithium métallique est choisie parmi un ou plusieurs parmi une poudre de lithium, des lingots de lithium, ou des plaques de lithium.

FIG. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 101609908 A